# EUROPEAN PATENT SPECIFICATION

(11) **EP 3 589 697 B1**
(45) Date of publication and mention of the grant of the patent: **03.01.2024**
(21) Application number: 18882263.9
(22) Date of filing: 25.05.2018
(51) Int. Cl.: C08L 77/02, C08L 77/04, C08L 77/06, C08K 3/04, B32B 27/34, B32B 27/08, B32B 27/18, B42D 25/23, B42D 25/24, B42D 25/36, B42D 25/41, B32B 7/12, B32B 23/08, B32B 23/20, B32B 27/20, B32B 27/22, B32B 27/28, B32B 27/30, B32B 27/32, B32B 27/36

(54) **LASER MARKABLE MATERIALS COMPRISING A POLYAMIDE COMPONENT AND CARBON BLACK**
LASERMARKIERBARE MATERIALIEN MIT EINER POLYAMIDKOMPONENTE UND RUSS
MATÉRIAUX POUVANT ETRE MARQUÉS AU LASER, COMPRENANT UN COMPOSANT POLYAMIDE ET DU NOIR DE CARBONE

(43) Date of publication of application: 08.01.2020
(73) Proprietor: Evonik Operations GmbH, 45128 Essen (DE); Evonik Specialty Chemicals (Shanghai) Co., Ltd., Shanghai 201507 (CN)
(72) Inventor: YU, Huifeng, Shanghai 200061 (CN); YANG, Jianmin, Shanghai 200120 (CN); TENG, Fei, Shanghai 201108 (CN); HERMES, Florian, Haltern am See 46325 (DE); GOERING, Rainer, Borken 46325 (DE); YE, Chenyu, Shanghai 201108 (CN)
(74) Representative: Evonik Patent Association
(86) International application number: PCT/CN2018/088510
(87) International publication number: WO 2019/223007

(56) References cited:
- CN-A- 101 724 259
- CN-A- 101 724 259
- DE-A1- 19 523 086
- JP-A- H0 885 757
- JP-A- H0 885 757
- JP-A- 2007 238 653
- JP-A- 2007 238 653
- JP-A- 2010 138 285
- JP-A- 2010 138 285
- JP-A- 2010 248 400
- JP-A- 2010 248 400
- US-A- 5 976 411
- US-A- 5 976 411
- US-A1- 2012 001 413
- US-A1- 2012 164 419

## Description

### Field of the invention

The present invention relates to laser markable materials, particularly to a polymer composite comprising a polyamide component and carbon black.

### Background

Inscribing plastics by means of laser engraving is widely used in security documents, in particular identification documents such as passports, passes, ID cards or credit cards. The black-and-white personalisation of cards by means of laser engraving, that is to say the application of lettering or images such as black-and-white photographs, is generally known. Personalisation by means of laser engraving is generally distinguished in particular by its high security against forgery. The (text) image is formed on the inside of the card, so that it is not possible to remove the (text) image and produce a new (text) image.

At present, the most commonly used plastics in laser engraving identification cards and security documents are polycarbonates. For example, US2012001413 describes a layered structure having laser engravability wherein the layer for laser engraving is polycarbonate based. DE 19523086 A1 relates to laser markable polymer compositions for the use in e.g. identity documents, wherein the polymer composite comprises a polymer matrix and carbon black. US 2012/164419 A1 describes multilayer laser markable sheets used for electronic passports. In CN 101724259 A a laser markable polymer based on polyamide and carbon black is disclosed.

However, there are a number of disadvantages with the cards made of polycarbonates, for example, their relatively poor resistance towards some industrial chemicals (such as organic solvents) and some daily used chemicals (such as creams and lotions), which leads to cracking and ultimately results in potential damages and reduced lifetime of the cards upon the exposure to these chemicals.

There is therefore a need for a laser markable material with better chemical resistance.

### Summary of the invention

The present invention provides a laser markable polymer composite, comprising:
(a) a polyamide component as the matrix, and
(b) carbon black as a laser-sensitive additive,
wherein
the polyamide component consists of a polyamide selected from the group consisting of:
(a1) a linear aliphatic polyamide of the AB type of claim 1 having 10-12 carbon atoms, produced by polymerizing lactams having from 10-12 carbon atoms in the monomer unit or by polycondensing a ω-aminocarboxylic acids having from 10-12 carbon atoms in the monomer unit, or
(a2) a linear aliphatic polyamide of the AABB type of claim 1, produced by polycondensing diamines having 6-14 carbon atoms in the monomer units and dicarboxylic acids having 9-14 carbon atoms in the monomer unit, or
(a3) a cycloaliphatic polyamide of claim 1, produced by polycondensing a cycloaliphatic diamine having 10-20 carbon atoms in the monomer units and an aliphatic dicarboxylic acid having 8-18 carbon atoms in the monomer units, optionally further produced by a lactam having 6-14 carbon atoms or a linear aliphatic ω-aminocarboxylic acid having 6-14 carbon atoms,
the carbon black is present in an amount of 50-300 ppm, based on the total weight of the polymer composite.

Within the scope of the invention, ppm means ppm by weight, unless indicated otherwise. A copolymer in view of this invention is a product of a copolymerization of at least two of the above-described polyamides (a1), (a2), (a3).

The present invention also provides the use of, and the moulded article made of the laser markable polymer composite.

The present invention further provides a layered structure comprising at least one layer made of the laser markable polymer composite and its production as well as a security document comprising the layered structure.

The present invention is based on the following findings:
(1) the selection of the polyamide and the amount of the carbon black result in both sufficient transparency and sufficient absorption centres for the laser energy, such that desired quality (that is to say sharpness and resolution) of laser marking is achieved, and
(2) the selection of the polyamide as the matrix results in better chemical resistance than conventional polycarbonates as the matrix.

### Detailed description of the invention

The laser markable polymer composite of the present invention comprises a polyamide component as matrix which consists of a polyamide selected from the above polyamides (a1), (a2), (a3) and the compound thereof as well as the copolymer thereof.

Polyamides (a1) to (a3) are suitable polyamide components. Preferred polyamides are (a1) or (a3) and especially (a3).

The linear aliphatic polyamide (a1) or (a2) has from 10-12 carbon atoms in the individual monomer units. Said linear aliphatic polyamide is producible from a combination of a diamine and a dicarboxylic acid, from an ω-aminocarboxylic acid and/or the corresponding lactam. The monomer units in question are therefore the units which derive from the lactam, ω-aminocarboxylic acid, diamine or dicarboxylic acid. Suitable linear aliphatic polyamides (a1) further include copolyamides which comprise diamines having 6-14 carbon atoms in the monomer unit and dicarboxylic acids having 9-14 carbon atoms in the monomer unit (e.g. PA12/1012).

The following polyamides (a1), (a2) are covered by claim 1: PA610, PA612, PA10, PA1010, PA11, PA1012, PA1210, PPA12, PA1212.

Commercially available products of the linear aliphatic polyamide (a1) or (a2) are for example PA12 products under the tradename of VESTAMID^{®} L, commercially available from Evonik Resource Efficiency GmbH, such as VESTAMID^{®} L2101F and VESTAMID^{®} L1940. Suitable cycloaliphatic diamines of the cycloaliphatic polyamide (a3) are for example bis-(4-amino-3-methyl-cyclohexyl)-methane (MACM), bis-(4-amino-cyclohexyl)-methane (PACM), and the mixtures thereof.

Suitable aliphatic dicarboxylic acids of the cycloaliphatic polyamide (a3) are for example sebacic acid, undecanedioic acid, dodecanedioic acid, tridecanedioic acid (brassylic acid), tetradecanedioic acid, pentadecanedioic acid, hexadecanedioic acid, and the mixtures thereof.

The cycloaliphatic polyamide (a3) is typically produced from the cycloaliphatic diamine and the dicarboxylic acid. However, derivatives thereof may also be employed, for example the diisocyanate which derives from the cycloaliphatic diamine, or a dicarboxylic diester which derives from the dicarboxylic acid.

The cycloaliphatic polyamide (a3) is selected from the group consisting of MACM10, MACM11, MACM12, PACM10, PACM11, PACM12, TMDC10, TMDC11, TMDC12.

The cycloaliphatic diamine may exist as a mixture of isomers. For example, PACM may exist as a mixture of cis, cis, cis, trans and trans, trans isomers. It is commercially available with various isomer ratios. In one preferred embodiment the trans, trans isomer content of the PACM or of the employed derivative thereof is 30-70% and particularly preferably from 35-65%.

More preferably, the cycloaliphatic polyamide (a3) is transparent with a haze of less than 3% and particularly preferably of less than 2% where both properties are determined to ASTM D1003 on injection moulded test specimens of 2 mm in thickness.

Commercially available products of the cycloaliphatic polyamide (a3) are for example PA PACM12 products under the tradename of TROGAMID^{®}, commercially available from Evonik Resource Efficiency GmbH, such as TROGAMID^{®} CX7323 and TROGAMID^{®} CX9704.

The laser markable polymer composite of the present invention comprises carbon black as a laser-sensitive additive.

Preferably, the carbon black has a particle size of 10 nm-10 µm, and more preferably of 50 nm-2 µm.

Preferably, the carbon black is present in the polymer composite in an amount of 100-250 ppm, more preferably 120-200 ppm, and most preferably 120-180 ppm.

Commercially available products of the carbon black are for example carbon black products under the tradenames Printex^{®} and Lamp black both commercially available from Orion Engineered Carbons GmbH, such as Lamp black 101.

The laser markable polymer composite of the present invention may include other ingredients, such as stabilizers, lubricants, colorants, plasticizers, nucleants, antioxidants, impact modifiers and UV absorbers, depending on the desired performance without impairing the transparency significantly. Preferably, these ingredients are added in low amounts, typically up to 20 wt%, more preferably up to 5 wt% of the total composite.

The laser markable polymer composite of the present invention can be produced for example in a twin-screw compounding extruder at conventional processing temperatures for the polyamides.

The present invention also provides use of the laser markable polymer composite as material for producing mouldings which are marked with the aid of lasers.

The present invention further provides the moulded article made of the laser markable polymer composite. Preferably, the moulded article is in the form of a film.

The layered structure of the present invention comprises:
(A) at least one layer (A) comprising a thermoplastic plastic, and
(B) at least one layer (B) made of the laser markable polymer composite.

There is no limit to the thermoplastic plastic of layer (A), examples of which include cellulose acetate propionate, cellulose acetate butyrate, polyesters, polyamides, polycarbonates, polyimides, polyolefins, polyvinylchlorides, polyvinylacetals, polyethers and polysulphonamides. Preferably, the thermoplastic plastic of layer (A) is a polyamide identical to the polyamide component of layer (B) for compatibility reason.

Layer (A) can additionally comprise a white pigment, which improves the visibility of the incorporated inscription or image(s) formed in layer (B). Preferably, the white pigment is selected from titanium dioxide, zirconium dioxide, barium sulfate, zinc oxide and zinc sulfide.

Commercially available products of the white pigment are for example titanium dioxide products under the tradename of Ti-Pure^{™}, commercially available from the Chemours Company, such as Ti-Pure^{™} R-105.

Preferably, the layered structure comprise at least three layers wherein layer (A) is between two layers (B).

Such an at least three-layered structure has the advantage that, when it is incorporated into a security document, it is not necessary to ensure that the layer (B) (which is laser markable) is oriented outwards.

The layered structure of the present invention can have one or more further layer(s) comprising at least one thermoplastic plastic between the layer (A) and the layer(s) (B). These can be translucent or white layers, transparent layers or coloured layers.

The layered structure of the present invention, is outstandingly suitable as a component of security documents, preferably identification documents, which are to be inscribed by means of laser engraving.

The layered structure of the present invention can be produced, for example and preferably, by means of lamination, coextrusion, in mould labeling, and direct gluing of the layers that are present.

The layered structure according to the invention is particularly preferably suitable for identification documents in the form of bonded or laminated layers in the form of plastics cards.

Accordingly, the invention further provides an identification document, comprising at least the layered structure of the present invention. The identification documents are for example identification cards, passports, driving licenses, credit cards, bank cards, cards for controlling access or other identity documents, etc.

The identification document can further comprise additional layers which provide protection against UV radiation, protection against mechanical and chemical damage etc.

But due to the better chemical resistance achieved by the polymer composite of the present invention in the layer(s) (B), compared with polycarbonates which are commonly used at present, an additional layer for the protection against damages caused by industrial and daily chemicals, e.g. organic solvents, creams and lotions, might be saved.

### Drawings

Figs. 1-18 are the scanned images of the laser engraved samples of E1b-E17b and CE1b respectively,
Figs. 19-23 are the scanned images of the laser engraved samples of E2b, E6b, E8b, E10b and CE1b respectively after the treatment with acetone,
Figs. 24-28 are the scanned images of the laser engraved samples of E2b, E6b, E8b, E10b and CE1b respectively after the treatment with Banana boat^{®} Sport Sunscreen Lotion - SPF 30.

TROGAMID^{®} CX7323: PA PACM12, a polyamide produced from bis(4-aminocyclohexyl)methane and also dodecanedioic acid;; ηᵣₑₗ = 1.8; commercially available from Evonik Resource Efficiency GmbH;
VESTAMID^{®} L2101F: a base-unit PA12 with ηᵣₑₗ=2.2, commercially available from Evonik Resource Efficiency GmbH;
TROGAMID^{®} T5000: a polyamide consisting of tere-phthalic acid and 2,2,4- /2,4,4-trimethyl hexamethylene diamine, commercially available from Evonik Resource Efficiency GmbH;
VESTAMID^{®} HTplus M5000: a PA6I/6T copolymer, commercially available from Evonik Resource Efficiency GmbH;
VESTAMID^{®} DS22: a base-unit PA1010 with ηᵣₑₗ=2.2, commercially available from Evonik Resource Efficiency GmbH;
VESTAMID^{®} HS22: a base-unit PA610 with nᵣₑₗ=2.2, commercially available from Evonik Resource Efficiency GmbH;
Panlite^{®} L-1250Y: Polycarbonate (PC), commercially available from Teijin Limited;
Ti-Pure^{™} R-105: Titanium dioxide, commercially available from the Chemours Company;
Ultranox^{®} 626: Phosphite commercially available from Addivant Germany GmbH;
Lamp black 101: Carbon black with an average particle of 95 nm, commercially available from Orion Engineered Carbons GmbH.

### Preparation of masterbatches

Masterbatch granules having the compositions and the weight percentages as indicated in the following table 1 were prepared in a twin-screw compounding extruder (Coperion ZSK-26mc) at conventional processing temperatures for the materials as following:
TROGAMID^{®} CX7323: 260-300°C;
VESTAMID^{®} L2101F: 250-300°C;
TROGAMID^{®} T5000: 260-300°C;
VESTAMID^{®} HTplus M5000: 280-310°C;
VESTAMID^{®} DS22: 250-300°C;
VESTAMID^{®} HS22: 250-300°C;
Panlite^{®} L-1250Y of 260-300°C.

### Preparation of the polymer composites and the films made thereof

Polymer composites and the films of the examples (E1a-E17a) and the comparative example (CE1a) were prepared as following:
The installation used consisted of an extruder (Dr. Collin E20M) with a screw of 20mm diameter (D) and length of 25 × D and T-die head with 25mm slot width.

Polymer composites with predetermined amount of carbon black and the corresponding films as indicated in the following table 2 were prepared according to the following process: The granules of the masterbatches and corresponding matrix material were dry blended and fed into the hopper. The dry blended materials were then melted and mixed into homogeneous molten in the cylinder of the extruder. The polymer composites in molten state with predetermined amount of carbon black were obtained.

The polymer composites were in situ extruded out from the die. The melt of the polymer composites came out from the die and dropped at the polishing calender. Final shaping and cooling of the material took place on the polishing calender consisting of three rolls. The films made of the polymer composite with a thickness of 100 µm were obtained.

### Preparation of samples of a two layer structure

Samples of a two layer structure of the examples (E1b-E17b) and the comparative example (CE1b) were prepared as following:
Samples of a two layer structure with Layer 1 (Laser sensitive) having a thickness of 100 µm and Layer 2 (substrate) having a thickness of 2,000 µm as indicated in the following table 3 were prepared by an in mould labeling process.

A pre-cut film for Layer 1 was placed into an injection mould having a cavity of 60 mm × 60 mm × 2 mm. The film stuck to a wall of the cavity electrostatically. The mould was closed and melt of the materbatch was injected to the mould to form Layer 2 and bond the film of Layer 1.

### Laser Engraving of the samples of the two layer structure

Laser engraving was carried out on the samples of E1b-E17b and CE1b on a TruMark 3130 (TRUMPF) machine with the following parameters:
Laser medium: Nd : YVO₄
Wavelength: 1064 nm
Power: 10.5 W
Voltage: 220 V
DPI: 600
Frequency: 45000 Hz

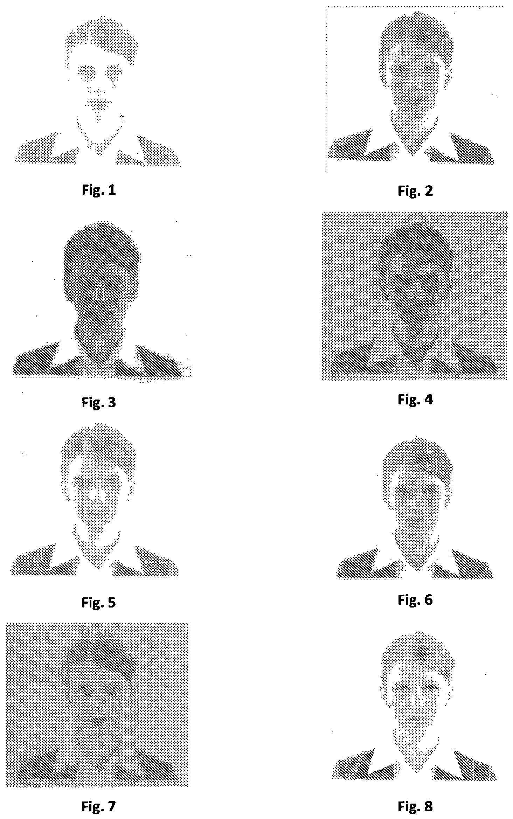

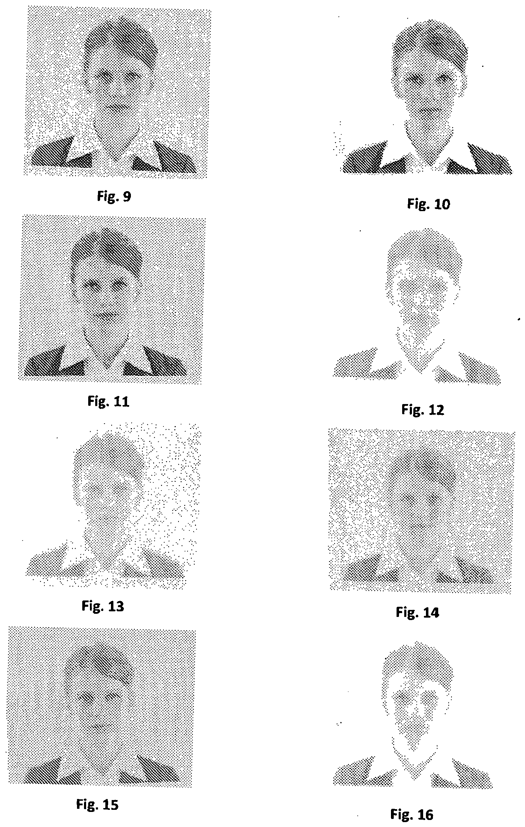

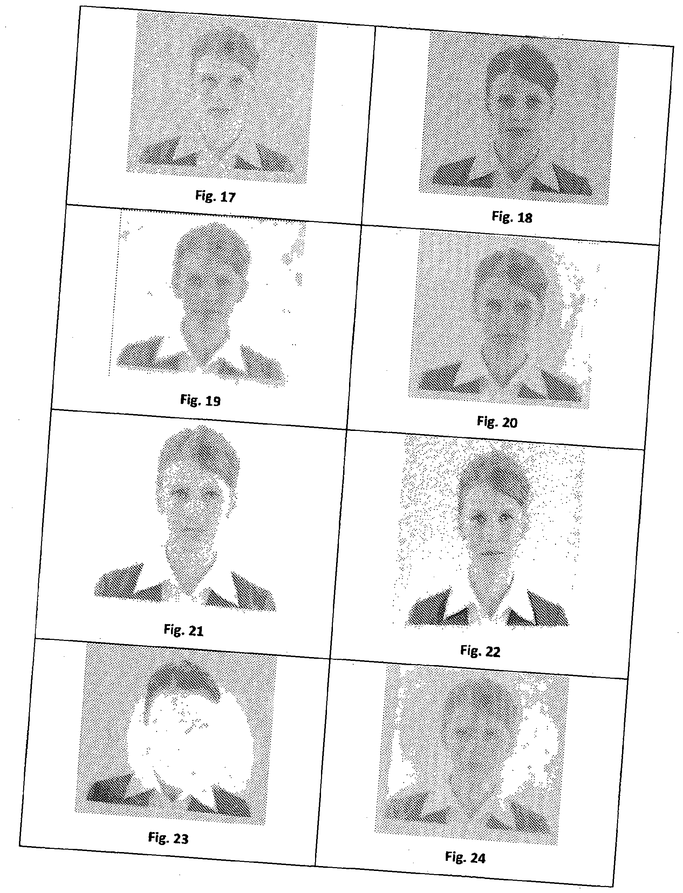

In the laser engraving, a black-and-white portrait of a woman was inscribed in Layer 1 of the individual samples of E1b-E17b and CE1b. As indicated in Figs. 1-17, an excellent contrast and very good graduation of the greyscales were achieved in E1b-E17b, which is close to or even comparable to the laser engraving performance of CE1b indicated in Fig. 18.

### Chemical resistance test

Laser engraved samples of E2b, E6b, E8b, E10b and CE1b were further tested for chemical resistance against an industrial chemical (acetone) and a daily chemical (Banana boat^{®} Sport Sunscreen Lotion - SPF 30) respectively according to the following procedure.

2 ml of acetone was dropped on a piece of cotton and the cotton was wiped against the facial part of the laser engraved image for 1 min. Damage of the laser engraved image was observed and the result is indicated in Figs. 19-23. It can been seen that no naked-eye visible damage was observed from the samples made of the polyamides (E2b, E6b, E8b and E10b), while the image disappeared in CE1b, and bubbling, cracking, developed textile and loss of glossy were also observed in CE1b.

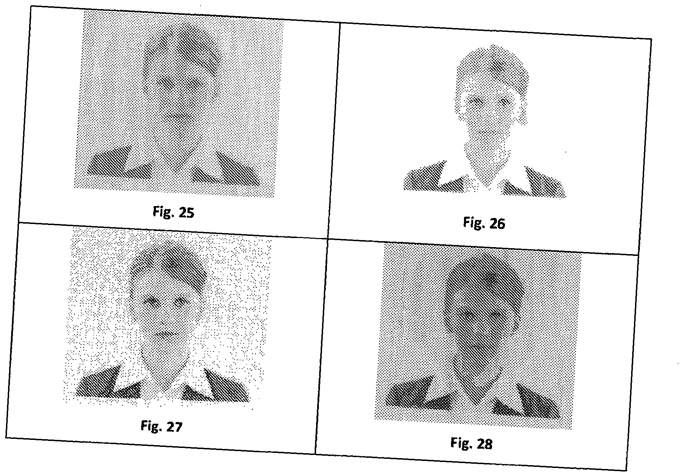

2 ml of the Banana boat^{®} Sport Sunscreen Lotion - SPF 30 was uniformly spread on the facial part of the laser engraved image. The samples were kept in an oven at a temperature of 65°C and under a humidity of 90%RH for 72 hours. Then the residual lotion was cleaned up. Damage of the laser engraved image was observed and the result is indicated in Figs. 24-28. It can been seen that no naked-eye visible damage was observed from the samples made of the polyamides (E2b, E6b, E8b and E10b), while there was a discoloration of the image in CE1b, and bubbling, developed textile and loss of glossy were also observed in CE1b.

**Table 1 Masterbatch**

| **Recipe** | **MB1** | **MB2** | **MB3** | **MB4** | **MB5** | **MB6** | **MB7** | **MB8** | **MB9** |
|---|---|---|---|---|---|---|---|---|---|
| TROGAMID^{®} | 84.8 | 99.88 | | | | | | | |
| CX7323 (wt%) | | | | | | | | | |
| VESTAMID^{®} | | | 99.88 | | | | | | |
| L2101F (wt%) | | | | | | | | | |
| TROGAMID^{®} | | | | 99.88 | | | | | |
| T5000 (wt%) | | | | | | | | | |
| VESTAMID^{®} | | | | | 99.88 | | | | |
| HT*plus* M5000 (wt%) | | | | | | | | | |
| VESTAMID^{®} | | | | | | 99.88 | | | |
| DS22 (wt%) | | | | | | | | | |
| VESTAMID^{®} | | | | | | | 99.88 | | |
| HS22 (wt%) | | | | | | | | | |
| Panlite^{®} | | | | | | | | 84.8 | 99.88 |
| L-1250Y (wt%) | | | | | | | | | |
| Ti-Pure^{™} | 15 | | | | | | | 15 | |
| R-105 (wt%) | | | | | | | | | |
| Ultranox^{®} | 0.2 | | | | | | | 0.2 | |
| 626 (wt%) | | | | | | | | | |
| Lampblack | | 0.12 | 0.12 | 0.12 | 0.12 | 0.12 | 0.12 | | 0.12 |
| 101 (wt%) | | | | | | | | | |

**Table 2 Final polymer composites and the films made thereof**

| **Recipe** | **E1a** | **E2a** | **E3a** | **E4a** | **E5a** | **E6a** | **E7a** | **E8a *** | **E9a *** | **E10a *** | **E11a *** | **E12a** | **E13a** | **E14a** | **E15a** | **E16a** | **E17a** | **CE1a** |
|---|---|---|---|---|---|---|---|---|---|---|---|---|---|---|---|---|---|---|
| MB2 (wt%) | 5 | 10 | 15 | 20 | | | | | | | | | | | | | | |
| TROGAMID^{®} | 95 | 90 | 85 | 80 | | | | | | | | | | | | | | |
| CX7323 (wt%) | | | | | | | | | | | | | | | | | | |
| MB3 (wt%) | | | | | 5 | 10 | 20 | | | | | | | | | | | |
| VESTAMID^{®} | | | | | 95 | 90 | 80 | | | | | | | | | | | |
| L2101F (wt%) | | | | | | | | | | | | | | | | | | |
| MB4 (wt%) | | | | | | | | 10 | 20 | | | | | | | | | |
| TROGAMID^{®} | | | | | | | | 90 | 80 | | | | | | | | | |
| T5000 | | | | | | | | | | | | | | | | | | |
| MB5 (wt%) | | | | | | | | | | 10 | 20 | | | | | | | |
| VESTAMID^{®} | | | | | | | | | | 90 | 80 | | | | | | | |
| HT*plus* | | | | | | | | | | | | | | | | | | |
| M5000 (wt%) | | | | | | | | | | | | | | | | | | |
| MB6 (wt%) | | | | | | | | | | | | 10 | 12.5 | 15 | 20 | | | |
| VESTAMID^{®} | | | | | | | | | | | | 90 | 87.5 | 85 | 80 | | | |
| DS22 (wt%) | | | | | | | | | | | | | | | | | | |
| MB7 (wt%) | | | | | | | | | | | | | | | | 10 | 20 | |
| VESTAMID^{®} | | | | | | | | | | | | | | | | 90 | 80 | |
| HS22 | | | | | | | | | | | | | | | | | | |
| MB9 (wt%) | | | | | | | | | | | | | | | | | | 10 |
| Panlite^{®} | | | | | | | | | | | | | | | | | | 90 |
| L-1250Y | | | | | | | | | | | | | | | | | | |
| | | | | | | | | | | | | | | | | | | |

| **Final composition** | **E1a** | **E2a** | **E3a** | **E4a** | **E5a** | **E6a** | **E7a** | **E8a *** | **E9a *** | **E10a *** | **E11a *** | **E12a** | **E13a** | **E14a** | **E15a** | **E16a** | **E17a** | **CE1a** |
|---|---|---|---|---|---|---|---|---|---|---|---|---|---|---|---|---|---|---|
| Matrix | PA PACM12 | | | | PA12 | | | PA 6-3-T | | PA 6I/6T | | PA1010 | | | | PA610 | | PC |
| Carbon black content (ppm) | 60 | 120 | 180 | 240 | 60 | 120 | 240 | 120 | 240 | 120 | 240 | 120 | 150 | 180 | 240 | 120 | 240 | 120 |

| | | | | | | | | | | | | | | | | | | |
|---|---|---|---|---|---|---|---|---|---|---|---|---|---|---|---|---|---|---|
| *** not covered by invention** | | | | | | | | | | | | | | | | | | |

**Table 3 Samples of a two layer structure**

| | **E1b** | **E2b** | **E3b** | **E4b** | **E5b** | **E6b** | **E7b** | **E8b *** | **E9b *** | **E10b *** | **E11b *** | **E12b** | **E13b** | **E14b** | **E15b** | **E16b** | **E17b** | **CE1b** |
|---|---|---|---|---|---|---|---|---|---|---|---|---|---|---|---|---|---|---|
| Layer 1 | E1a | E2a | E3a | E4a | E5a | E6a | E7a | E8a * | E9a * | E10a * | E11a * | E12a | E13a | E14a | E15a | E16a | E17a | CE1a |
| Layer 2 | MB1 | | | | | | | | | | | | | | | | | MB8 |

| Composition of the final samples | | | | | | | | | | | | | | | | | | |
|---|---|---|---|---|---|---|---|---|---|---|---|---|---|---|---|---|---|---|
| Matrix of Layer 1 | PA PACM12 | | | | PA12 | | | PA 6-3-T | | PA 6I/6T | | PA1010 | | | | PA610 | | PC |
| Carbon black content in Layer 1 (ppm) | 60 | 120 | 180 | 240 | 60 | 120 | 240 | 120 | 240 | 120 | 240 | 120 | 150 | 180 | 240 | 120 | 240 | 120 |
| Matrix of Layer 2 | PA PACM12 | | | | | | | | | | | | | | | | | PC |
| White pigment content in Layer 2 | 15% | | | | | | | | | | | | | | | | | |

| | | | | | | | | | | | | | | | | | | |
|---|---|---|---|---|---|---|---|---|---|---|---|---|---|---|---|---|---|---|
| * not covered by invention | | | | | | | | | | | | | | | | | | |

## Claims

1. A laser markable polymer composite, comprising:
(a) a polyamide component as the matrix, and
(b) carbon black as a laser-sensitive additive,
wherein
the polyamide component consists of a polyamide selected from the group consisting of:
(a1) a linear aliphatic polyamide of the AB type having 10-12 carbon atoms, produced by polymerizing lactams having from 10-12 carbon atoms in the monomer unit or by polycondensing a ω-aminocarboxylic acids having from 10-12 carbon atoms in the monomer unit, wherein the linear aliphatic polyamide is selected from the group consisting of PA10, PA11, PA12, or
(a2) a linear aliphatic polyamide of the AABB type, produced by polycondensing diamines having 6-14 carbon atoms in the monomer units and dicarboxylic acids having 9-14 carbon atoms in the monomer unit, wherein the linear aliphatic polyamide (a2) is selected from the group consisting of PA610, PA612, PA1010, PA1012, PA1210, PA1212, or
(a3) a cycloaliphatic polyamide, produced by polycondensing a cycloaliphatic diamine having 10-20 carbon atoms in the monomer units and an aliphatic dicarboxylic acid having 8-18 carbon atoms in the monomer units, optionally further produced by a lactam having 6-14 carbon atoms or a linear aliphatic ω-aminocarboxylic acid having 6-14 carbon atoms, wherein the cycloaliphatic polyamide is selected from the group consisting of MACM10, MACM11, MACM12, PACM10, PACM11, PACM12, TMDC10, TMDC11, TMDC12, and the compound of any two or more of a1)- a3) as well as the copolymer thereof,
the carbon black is present in an amount of 50-300 ppm, based on the total weight of the polymer composite.

2. Use of the laser markable polymer composite of claim 1 as material for producing mouldings which are marked with the aid of lasers.

3. Moulded article made of the laser markable polymer composite of claim 1, preferably the moulded article is a film.

4. A layered structure comprising
(A) at least one layer (A) comprising a thermoplastic plastic, and
(B) at least one layer (B) made of the laser markable polymer composite claim 1.

5. The layered structure of claim 4, wherein the thermoplastic plastic of layer (A) is selected from cellulose acetate propionate, cellulose acetate butyrate, polyesters, polyamides, polycarbonates, polyimides, polyolefins, polyvinylchlorides, polyvinylacetals, polyethers and polysulphonamides, preferably the thermoplastic plastic of layer (A) is a polyamide identical to the polyamide of layer (B).

6. A process for the production of the layered structure of any one of the preceding claims 4-5, comprising bonding the various films of plastic to one another by a process selected from lamination, coextrusion, in mould labeling, and direct gluing.

7. A security document, comprising the layered structure of any one of the preceding claims 4-5, preferably the document is an identification document, e.g. an identification card.

## Patentansprüche

1. Lasermarkierbarer Polymerverbundstoff, umfassend:
(a) eine Polyamidkomponente als die Matrix und
(b) Ruß als laserempfindlichen Zusatzstoff,
wobei
die Polyamidkomponente aus einem Polyamid besteht, das ausgewählt ist aus der Gruppe bestehend aus:
(a1) einem linearen aliphatischen Polyamid vom AB-Typ mit 10-12 Kohlenstoffatomen, hergestellt durch Polymerisieren von Lactamen mit von 10-12 Kohlenstoffatomen in der Monomereinheit oder durch Polykondensieren einer ω-Aminocarbonsäure mit von 10-12 Kohlenstoffatomen in der Monomereinheit, wobei das lineare aliphatische Polyamid ausgewählt ist aus der Gruppe bestehend aus PA10, PA11, PA12, oder
(a2) einem linearen aliphatischen Polyamid vom AABB-Typ, hergestellt durch Polykondensieren von Diaminen mit 6-14 Kohlenstoffatomen in den Monomereinheiten und Dicarbonsäuren mit 9-14 Kohlenstoffatomen in der Monomereinheit, wobei das lineare aliphatische Polyamid (a2) ausgewählt ist aus der Gruppe bestehend aus PA610, PA612, PA1010, PA1012, PA1210, PA1212, oder
(a3) einem cycloaliphatischen Polyamid, hergestellt durch Polykondensieren eines cycloaliphatischen Diamins mit 10-20 Kohlenstoffatomen in den Monomereinheiten und einer aliphatischen Dicarbonsäure mit 8-18 Kohlenstoffatomen in den Monomereinheiten, gegebenenfalls ferner hergestellt durch ein Lactam mit 6-14 Kohlenstoffatomen oder eine lineare aliphatische ω-Aminocarbonsäure mit von 6-14 Kohlenstoffatomen, wobei das cycloaliphatische Polyamid ausgewählt ist aus der Gruppe bestehend aus MACM10, MACM11, MACM12, PACM10, PACM11, PACM12, TMDC10, TMDC11, TMDC12,
und dem Gemisch von beliebigen zwei oder mehr von a1) bis a3) sowie dem Copolymer davon,
wobei der Ruß in einer Menge von 50-300 ppm, bezogen auf das Gesamtgewicht des Polymerverbundstoffs, vorhanden ist.

2. Verwendung des lasermarkierbaren Polymerverbundstoffs gemäß Anspruch 1 als Material zur Herstellung von Formkörpern, die mithilfe von Lasern markiert werden.

3. Formkörper, hergestellt aus dem lasermarkierbaren Polymerverbundstoff gemäß Anspruch 1, wobei der Formkörper vorzugsweise ein Film ist.

4. Schichtstruktur, umfassend:
(A) wenigstens eine Schicht (A), die einen thermoplastischen Kunststoff umfasst, und
(B) wenigstens eine Schicht (B), die aus dem lasermarkierbaren Polymerverbundstoff gemäß Anspruch 1 hergestellt ist.

5. Schichtstruktur gemäß Anspruch 4, wobei der thermoplastische Kunstststoff von Schicht (A) ausgewählt ist aus Celluloseacetatpropionat, Celluloseacetatbutyrat, Polyestern, Polyamiden, Polycarbonaten, Polyimiden, Polyolefinen, Polyvinylchloriden, Polyvinylacetalen, Polyethern und Polysulfonamiden, wobei der thermoplastische Kunststoff von Schicht (A) vorzugsweise ein mit dem Polyamid von Schicht (B) identisches Polyamid ist.

6. Verfahren zur Herstellung der Schichtstruktur gemäß einem der vorstehenden Ansprüche 4-5, umfassend Binden der verschiedenen Kunststofffilme aneinander durch ein Verfahren ausgewählt aus Lamination, Coextrusion, In-Mould-Labeling und Direktverkleben.

7. Sicherheitsdokument, umfassend die Schichtstruktur gemäß einem der vorstehenden Ansprüche 4-5, wobei das Dokument vorzugsweise ein Identifikationsdokument, z.B. eine Ausweiskarte, ist.

## Revendications

1. Composite de polymère marquable au laser, comprenant :
(a) un composant de polyamide en tant que matrice, et
(b) du noir de carbone en tant qu'additif sensible au laser,
dans lequel
le composant de polyamide est constitué d'un polyamide choisi dans le groupe constitué de :
(a1) un polyamide aliphatique linéaire du type AB ayant 10 à 12 atomes de carbone, produit par polymérisation de lactames ayant de 10 à 12 atomes de carbone dans le motif de monomère ou par polycondensation d'acides ω-aminocarboxyliques ayant de 10 à 12 atomes de carbone dans le motif de monomère, dans lequel le polyamide aliphatique linéaire est choisi dans le groupe constitué de PA10, PA11, PA12, ou
(a2) un polyamide aliphatique linéaire du type AABB, produit par polycondensation de diamines ayant 6 à 14 atomes de carbone dans les motifs de monomère et d'acides dicarboxyliques ayant 9 à 14 atomes de carbone dans le motif de monomère, dans lequel le polyamide aliphatique linéaire (a2) est choisi dans le groupe constitué de PA610, PA612, PA1010, PA1012, PA1210, PA1212, ou
(a3) un polyamide cycloaliphatique, produit par polycondensation d'une diamine cycloaliphatique ayant 10 à 20 atomes de carbone dans les motifs de monomère et un acide dicarboxylique aliphatique ayant 8 à 18 atomes de carbone dans les motifs de monomère, facultativement produit en outre par un lactame ayant 6 à 14 atomes de carbone ou un acide ω-aminocarboxylique aliphatique linéaire ayant 6 à 14 atomes de carbone, dans lequel le polyamide cycloaliphatique est choisi dans le groupe constitué de MACM10, MACM11, MACM12, PACM10, PACM11, PACM12, TMDC10, TMDC11, TMDC12,
et le composé de deux quelconques ou plus parmi a1) à a3) ainsi que le copolymère de ceux-ci,
le noir de carbone est présent en une quantité de 50 à 300 ppm, sur la base du poids total du composite de polymère.

2. Utilisation du composite de polymère marquable au laser selon la revendication 1 en tant que matériau pour produire des moulages qui sont marqués à l'aide de lasers.

3. Article moulé constitué du composite de polymère marquable au laser selon la revendication 1, l'article moulé étant de préférence un film.

4. Structure stratifiée comprenant
(A) au moins une couche (A) comprenant une matière plastique thermoplastique, et
(B) au moins une couche (B) constituée du composite de polymère marquable au laser de la revendication 1.

5. Structure stratifiée selon la revendication 4, dans laquelle la matière plastique thermoplastique de la couche (A) est choisie parmi l'acétate-propionate de cellulose, l'acétate-butyrate de cellulose, des polyesters, des polyamides, des polycarbonates, des polyimides, des polyoléfines, des poly(chlorures de vinyle), des polyvinylacétals, des polyéthers et des polysulfonamides, la matière plastique thermoplastique de la couche (A) étant de préférence un polyamide identique au polyamide de la couche (B).

6. Procédé de production de la structure stratifiée selon l'une quelconque des revendications précédentes 4 à 5, comprenant la liaison des différents films de matière plastique les uns aux autres par un processus choisi parmi un laminage, une coextrusion, un marquage dans le moule et un collage direct.

7. Document de sécurité, comprenant la structure stratifiée selon l'une quelconque des revendications précédentes 4 à 5, le document étant de préférence un document d'identification, par exemple une carte d'identification.
